Europäisches Patentamt

European Patent Office

Office européen des brevets

(19)

(11) Numéro de publication: **0 058 586**
**B1**

(12) **FASCICULE DE BREVET EUROPEEN**

(45) Date de publication du fascicule du brevet: **24.09.86**

(51) Int. Cl.⁴: **H 04 J 3/06**

(21) Numéro de dépôt: **82400141.6**

(22) Date de dépôt: **26.01.82**

(54) **Procédé de synchronisation à la réception d'un signal pourvu d'un motif de synchronisation.**

(30) Priorité: **06.02.81 FR 8102412**

(43) Date de publication de la demande:
**25.08.82 Bulletin 82/34**

(45) Mention de la délivrance du brevet:
**24.09.86 Bulletin 86/39**

(84) Etats contractants désignés:
**DE GB NL SE**

(56) Documents cités:
**FR-A-2 098 286**
**FR-A-2 404 972**
**US-A-3 652 799**
**US-A-3 920 900**

**ALTA FREQUENZA, Vol. 39, No. 1, janvier 1970,
page 17**

(73) Titulaire: **LIGNES TELEGRAPHIQUES ET
TELEPHONIQUES L.T.T.
1, rue Charles Bourseul
F-78702 Conflans-Ste-Honorine (FR)**

(72) Inventeur: **Auzet, Christian
THOMSON-CSF SCPI 173, bld Haussmann
F-75360 Paris Cedex 08 (FR)**
Inventeur: **Rusch, Daniel
THOMSON-CSF SCPI 173, bld Haussmann
F-75360 Paris Cedex 08 (FR)**
Inventeur: **Chabernaud, Daniel
THOMSON-CSF SCPI 173, bld Haussmann
F-75360 Paris Cedex 08 (FR)**

(74) Mandataire: **Weinmiller, Jürgen et al
Zeppelinstrasse 63
D-8000 München 80 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention a pour objet un procédé de synchronisation à la réception d'un signal pourvu d'un motif de synchronisation.

Il est connu (revue "Alta Frequenza", vol. 39, N° 1, Janvier 1970, page 17) d'opérer une telle synchronisation en mettant en oeuvre des opérations logiques notamment en ce que concerne la perte et la reprise de la synchronisation. Ces dispositifs présentent l'inconvénient d'être très sensible aux micro-coupures ou aux évanouissements ("fading") du signal. En effet, les critères choisis entrainent la perte de synchronisation lors de l'absence itérative du décodage du signal de synchronisation stabilisé précédemment acquis. Ceci est le cas notamment des critères recommandés par le C.C.I.T.T., lesquels mettent en oeuvre un cycle de perte et de reprise de synchronisation où une nouvelle synchronisation est recherchée après abandon de la synchronisation précédente.

Il est également connu (brevet US—3 920 900) d'opérer une telle synchronisation en déterminant d'unpart, par des opérations suffisamment répétées la perte du mot de verrouillage vrai, dit de référence, et en déterminant d'autre part et indépendemment, l'apparition d'un nouveau mot de verrouillage, dit potentiel, par des opérations consistant à valider ce mot s'il apparaît plusieurs fois de suite dans plusieurs trames successives sans qu'un autre du même type apparaisse ailleurs dans ces trames. Le changement de synchronisation est alors décidé à la fin si l'on a perdu définitivement le mot de verrouillage de référence et si l'on a plusieurs fois de suite retrouvé un mot de verrouillage potentiel déterminé san en avoir dans le même temps trouvé un autre.

Ce genre de procédé connu présente les inconvénients de n'être d'une part pas parfaitement sûr, car il peut dans certains cas entraîner de fausses désynchronisations, et d'entraîner parfois une durée d'acquisition encore trop longue.

L'invention a pour objet un procédé permettant un synchronisation stable et sûre, qui ne soit pas perturbée par les micro-coupures ou les évanouissements du signal, et dont la durée d'acquisition est très réduite.

L'invention concerne ainsi un procédé de synchronisation à la réception d'un signal de transmission comportant un motif de synchronisation apparaissant périodiquement, (mot de verrouillage de trame VT), ledit procédé comportant au moins une opération de validation du mot de verrouillage de référence et au moins une opération de validation d'un mot de verrouillage potentiel, caractérisé en ce qu'il consiste:

— à rechercher systématiquement dans une trame, normalement synchronisée sur le mot de verrouillage de référence, s'il existe un mot de verrouillage potentiel dans cette trame,

— au premier mot de verrouillage potentiel alors trouvé, à cesser cette recherche systématique, et à noter position dans ladite trame dudit mot de verrouillage potentiel,

— a vérifier alors dans la trame suivante la présence du mot de verrouillage de référence,

— à revenir au point de départ si ce dernier est toujours présent,

— dans le cas contraire, à vérifier, si ledit mot de verrouillage potentiel se retrouve, dans ladite trame suivante, au même endroit que celui trouvé dans ladite trame précédente,

— à revenir au point de départ si cette dernière opération est négative,

— à continuer ces opérations dans le cas contraire,

— à opérer un changement de synchronisation sur ledit mot de verrouillage potentiel si a fois de suite on a retrouvé à la même place dans la trame ledit mot de verrouillage potentiel alors que l'on n'a simultanément pas retrouvé à sa place le mot de verrouillage de référence.

L'invention sera mieux comprise dans le description qui va suivre, donnée à titre d'exemple non limitatif, en se reportant aux dessins annexés où:

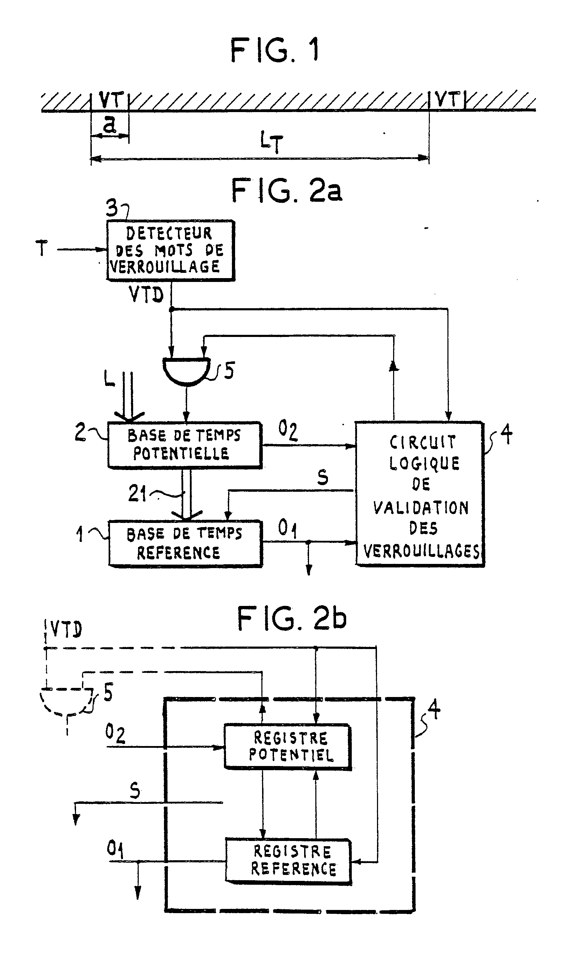

8 la figure 1 illustre un signal de transmission par trames,
— la figure $2_a$ et $2_b$ représentent des schémas fonctionnels selon l'invention,
— la figure 3 représente un diagramme d'états auquel correspond le mode de réalisation de la figure 4,
— la figure 5 représente une variante aisément programmable selon l'invention.

La figure 1 illustre une transmission continue dite par trames à laquelle l'invention peut être appliquée. Une trame de longueur $L_T$ bits comporte en son début un motif de synchronisation VT de a bits (par exemple, $L_T=768$ et a=8). On comprendra que d'une manière générale l'invention s'applique à toute réception où des signaux sont périodiquement pourvus d'un motif de synchronisation.

La figure $2_a$ représente un détecteur 3 des mots de verrouillages recevant le signal T à synchroniser. Les mots de verrouillage constituent des motifs de synchronisation. Le signal de décodage noté VTD d'un motif de synchronisation est introduit dans une base de temps potentielle 2 qui se met en conséquence à une phase donnée, éventuellement en présence d'un signal d'autorisation provenant d'un circuit logique 4 de validation des verrouillages, lequel reçoit également le signal de décodage VTD. Le décodage d'un état donné de la base de temps potentielle 2 produit un signal $O_2$ en direction du circuit logique 4. Le circuit logique 4 produit alors, en détectant les coïncidences entre un VTD et le signal $O_2$, une identification de motifs de synchronisation potentielle VTH. Le circuit logique 4 produit alors, selon un critère logique, un signal S de confirmation de la synchronisation potentielle. De même, le décodage d'un état donné d'une base de temps de référence 1 bouclée sur elle-même produit un signal $O_1$ de synchronisation, qui est introduit dans le circuit logique 4. Le signal S de confirmation de la synchronisation potentielle, qui est ainsi produit par traitement logique des signaux $O_2$ et VTD, est introduit à une entrée de la base de temps 1, et a pour effet de mettre en phase celle-ci en la recalant sur le motif de synchronisation potentielle VTH.

Le circuit logique 4 produit également une identification de l'absence d'un motif de synchronisation de référence et reçoit à cet effet le signal $O_1$. La production du signal S commandant le recalage de la synchronisation sur le motif de synchronisation potentielle VTH confirmée aura alors lieu seulement si le motif de synchronisation de référence n'apparaît plus.

La figure $2_b$ décrit une structure du circuit logique 4 où deux registres, respectivement de référence et potentiel reçoivent le signal VTD et respectivement les signaux $O_1$ et $O_2$. La production d'un signal S interviendra en comparant les contenus dss registres, qui peuvent le cas échéant intéragir.

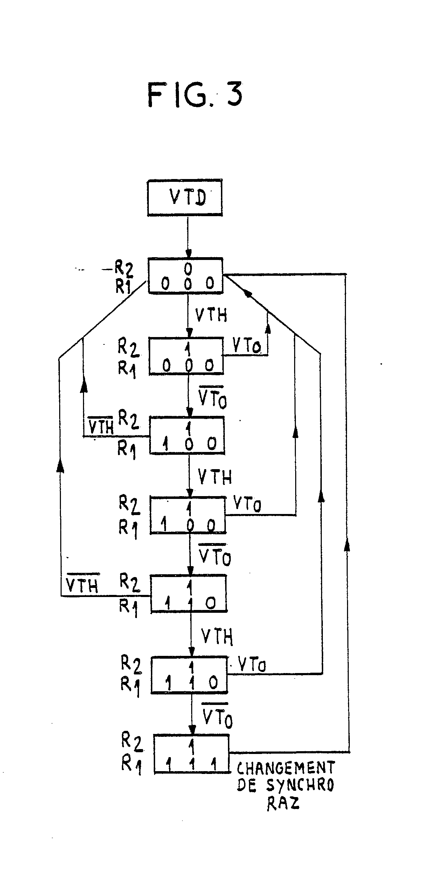

Selon l'invention, on met en oeuvre deux registres exploités selon un mode alternatif, c'est-à-dire que la décision de changement de synchronisation est prise suivant un critère logique qui tient compte en alternance des signaux logiques qui chargent les registres. Une telle réalisation est illustrée par les figures 3 à 5.

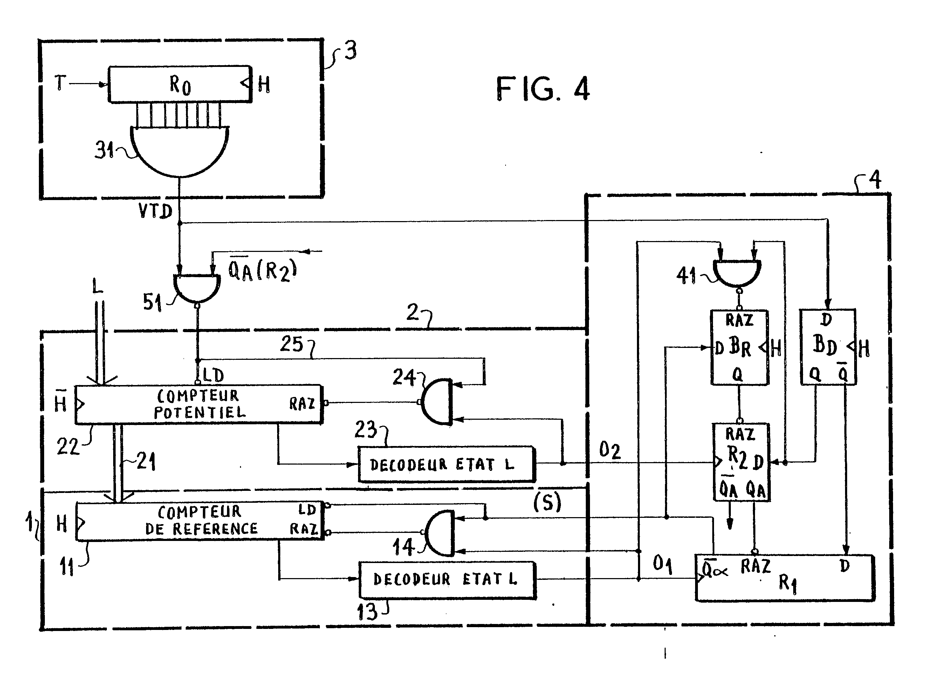

Un diagramme d'état des registres est représenté à la figure 3 et correspond au fonctionnement du circuit décrit à titre d'exemple à la figure 4. Toute présence d'une reconfirmation notée VTO de la synchronisation antérieure ou toute absence notée $\overline{VTH}$ d'une reconfirmation d'une nouvelle synchronisation potentielle remet le cycle à zéro. Trois alternances successives de la présence d'un motif de synchronisation potentielle noté VTH et de l'absence notée $\overline{VTO}$ d'un motif de synchronisation de référence provoquent le changement de synchronisation et la remise à zéro des registres $R_1$ et $R_2$.

Sur la figure 4, le registre à décalage $R_0$ reçoit les informations séries T de la trame à la cadence de l'horloge de ligne H. Le motif de synchronisation VT est recherché par une porte ET multiple 31. Celle-ci produit un signal VTD de niveau 1 lors de la reconnaissance d'un tel motif. Ce signal est introduit à une des deux entrées d'une porte ET 51 dont la seconde entrée reçoit un signal $\overline{Q}_A$ ($R_2$) dans des conditions qui seront précisées plus loin. En cas d'autorisation, ($\overline{Q}_A$=1), un O logique apparaît à la sortie de la porte 51 et il valide de chargement du compteur potentiel 22 à la valeur L. Le compteur potentiel est cadencé par l'horloge H. Un décodeur 23 décode cet état L et produit en conséquence un signal $O_2$ de cadence d'un registre $R_2$, dans le cas d'espèce une simple bascule. Une bascule $B_D$ cadencée par l'horloge H reçoit d'autre part le signal VTD à son entrée D et fait en conséquence rentrer le 1 logique présent à sa sortie Q à l'entrée D du registre $R_2$ qui prend ainsi la valeur 1. La sortie inverseuse $\overline{Q}_A$ du registre $R_2$, qui est dans ce cas au niveau O, constitue le signal introduit à la seconde entrée de la porte ET 51 mentionnée ci-dessus. Tant que le registre $R_2$ sera chargé, ($\overline{Q}_A$=0), la porte ET 51 sera inhibée et le compteur potentiel restera bouclé sur lui-même, ce qui permet de ne pas prendre en compte dans le compteur potentiel d'éventuels motifs de synchronisation ultérieurs. La sortie $Q_A$ de $R_2$ est réliée á l'entrée de remise à zéro RAZ du registre $R_1$.

Un compteur de référence 11 cadencé par l'horloge H et bouclé sur lui-même voit son état L déocde par un décodeur 13. Ce décodage entraîne la production d'un signal de synchronisation $O_1$ qui est introduit comme signal de cadence dans un registre à décalage $R_1$. Ce registre à décalage $R_1$ reçoit à son entrée D la sortie $\overline{Q}$ de la bascule $B_D$.

Le signal de synchronisation $O_1$ est introduit à une entrée d'une porte ET inverseuse 41 dont l'autre entrée reçoit le signal Q de la bascule $B_D$. La sortie de la porte ET inverseuse 41 est introduite à l'entrée de remise à zéro RAZ d'une bascule $B_R$ cadencée par l'horloge H et qui reçoit à son entrée D un signal inversé $\overline{Q}a$ dont la valeur est égale à 1 sauf en cas de changement de synchronisation, ainsi qu'il sera expliqué plus loin. La sortie de la bascule $B_R$ est introduire à l'entrée de remise à zéro RAZ du registre $R_2$. La sortie $Q_A$ du registre $R_2$ est introduite à l'entrée de remise à zéro RAZ du registre $R_1$.

Envisageons maintenant le fonctionnement du circuit décrit ci-dessus dans les différents cas qui se présentent en pratique.

Au départ, les deux compteurs sont bouclés sur eux-mêmes. Le signal $O_1$ possède une phase quelconque par rapport à l'état de synchronisation. Le premier signal VTD qui va charger le compteur potentiel au compte L et mémoriser un 1 dans le registre $R_2$ est le premier signal potential VTH: la sortie Q de la bascule $B_D$ est en effet à l'état 1 puisque sont entrée D reçoit le signal VTD. $\overline{Q}_A$ va inhiber la porte ET 51. Si aucun signal VTD n'apparaît au moment où le compteur de référence (11) atteint le compte L, la bascule $B_D$ ($\overline{Q}$=1) va introduire un 1 logique dans l'entrée D du registre $R_1$. Si un deuxième VTH apparaît la fois suivante où le compteur potentiel atteint le compte L, le registre $R_2$ va rester à la valeur 1. Lorsque la compteur de référence atteindra de nouveau le compte L, un 1 sera de nouveau introduit dans le registre à décalage $R_1$ et le premier 1 sera décalé d'un cran. Ceci se poursuit jusqu'à ce que $Q_a$ soit chargé à la valeur 1 ($\overline{Q}a$=0) après $a$ décalages. La présence de $\overline{Q}a$=0 va entraîner le chargement du compteur de référence au compte du compteur potentiel (entrée LD=0). En effet, dans ce cas, l'entrée de la porte ET inverseuse 14 qui reçoit $\overline{Q}a$ est à zéro et sa sortie à 1, ce qui inhibe une éventuelle remise à zéro du compteur de référence. La synchronisation est maintenant acquise. Simul-

tanément, le signal $\overline{Q}a=0$ met $B_R$ au niveau 0 ce qui entraîne en cascade la remise à zéro des registres $R_1$ et $R_2$, et débloque également la porte ET 51 ($\overline{Q}_A=1$).

Si maintenant, un décodage d'un motif de synchronisation apparaît chaque fois que le compteur de référence aura atteint le compte L, $R_1$ et $R_2$ seront remis à zéro en cascade par l'intermédiaire de la porte ET inverseuse 41.

Si aucun décodage n'intervient à un autre moment, la bascule $R_2$ restera au niveau 0.

Le compteur de référence est alors bouclé sur lui-même et remis à zéro par la détection du décodage de son état L ($O_1=1$), produisant, puisque $\overline{Q}a=1$, un O logique à sortie de la porte ET inverseuse 14 dont la sortie est reliée à l'entrée de mise à zéro RAZ du compteur de référence 11.

La porte ET inverseuse 24 a pour fonction de donner priorité au chargement du compteur potentiel sur sa remise à zéro. Cette porte reçoit à ses entrées respectivement la sortie de la porte ET inverseuse 51 et la sortie du décodeur 23 (signal $O_2$), et sa sortie est reliée à l'entrée RAZ du compteur potential 22.

Le fonctionnement de la boucle lors de l'apparition de décodages d'un motif de synchronisation potentielle en dehors de l'état L du compteur de référence peut être maintenant expliqué de manière simple.

Un tel décodage entraîne le chargement d'un 1 logique dans le registre $R_2$, donc l'inhibition de la porte ET inverseuse 51, ce qui empêchera la prise en compte de toute détection ultérieure par le compteur potentiel ainsi bouclé sur lui-même. Si une détection du motif de synchronisation apparaît en coïncidence avec le décodage de l'état L du compteur de référence (signal $O_1$), $R_2$ et $R_1$ seront remis à zéro. Dans le cas contraire, le registre $R_1$ est chargé par un 1 logique et le registre $R_2$ reste au niveau 1. Le changement de synchronisation aura donc lieu lorsque α motifs de synchronisation répétitifs apparaissant en coïncidence avec $O_2$ alterneront avec α détections d'absence d'un motif de synchronisation pendant l'apparction du signal $O_1$.

Toute présence d'une reconfirmation VTO de la synchronisation antérieure entraîne la remise à séro de $R_1$ et $R_2$ par une validation en cascade de leur entrée RAZ. La bascule $B_D$ ayant mémorisé VTD=1, la porte 41 reçoit en effet simultanément un 1 logique à chacune de ses entrées. Toute absence d'un reconfirmation de la nouvelle synchronisation potentielle entraîne l'introduction d'un zéro dans le registre $R_2$ et la remise à zéro du registre $R_1$. La bascule $B_D$ a en effet mémorisé VTD=0.

Lé décodage des α sorties successives du registre à décalage peut être substitué à celui de la seule α ième position et dans ce cas l'introduction d'un O logique en première position du registre à décalage est du point de vue logique, équivalent à une remise à zéro, c'est-à-dire à une initialisation du cycle de vérification du critère.

D'autre part, il convient de remarquer que la bascule $B_D$ a pour fonction de retarder les signaux VTD d'un temps équivalent au délai d'émission du signal $O_2$. Ce retard est, dans les cas d'espèce envisagés, d'une période d'horloge (1/2 période au niveau du compteur potentiel cadencé par l'horloge $\overline{H}$, 1/2 période au niveau du décodage de l'état du compteur potentiel, par exemple par le décodeur 23).

Il va de soi que le changement de synchronisation par remise en phase de la base de temps potentielle peut être obtenu par d'autres moyens que ceux décrits ci-dessus, par exemple par chargement d'un compteur de référence à un compte donné. Dans cet ordre d'idées, on comprendra que la description ci-dessus a envisagé un cas non limitatif où les deux compteurs étaient du même type et fonctionnaient symétriquement.

Les performances d'un dispositif selon l'invention et correspondant au critère dont le diagramme est donné figure 3 sont illustrées dans les tableaux suivants dans lesquels les temps sont exprimés en nombre de trames et avec les notations suivantes:

tms=temps moyen de synchronisation, tmd=temps moyen de désynchronisation,

$P=1/2^a$=probabilité d'apparition d'une imitation d'un mot de VT,

td 99%=temps de désynchronisation correspondant à une probabilité de 0,99 de rester synchronisé,

tdm=temps minimum de désynchronisation,

ts 99%=temps de synchronisation correspondant à une probabilité de 0,99 d'être synchronisé,

σ=écart type.

Les applications numériques (calcul et mesures) sont données pour α=3, L=768 et a=8, et les résultats correspondants sous forme d'un nombre de trames.

TABLEAU I: Synchronisation
(pour un taux d'erreur nul en ligne)

| Critere C.C.I.T.T. | Critere suivant l'invention |
|---|---|
| $tms = \alpha + LP = 6$ <br><br> $\sigma ms = \sqrt{LP} = 1,73$ <br><br><br><br> $ts\ 99\% = tms + 3\sigma ms = 11,2$ | $tms = \alpha + 1 + LP = 7$ <br><br> $\sigma ms = \sqrt{LP} + \sqrt{\dfrac{\alpha}{L}} = 1,83$ <br><br> $ts\ 99\% = tms + 3\sigma ms = 12,5$ <br><br> Mesuré: <br> $tms = 6,93;\ \sigma ms = 1.75;$ <br><br> $ts\ 99\% = 10$ |

TABLEAU II: Desynchronisation
(pour un taux d'erreur en ligne égal à 0,5)

| Critere C.C.I.T.T. | Critere suivant l'invention |
|---|---|
| $tmd = 1 + \alpha = 4$ <br><br><br> $\sigma md = \sqrt{LP} = 1,7$ <br><br><br><br><br><br> $tdm = td\ 99\% = \alpha = 3$ | $tmd = \dfrac{1 + LP}{LP\alpha} = 87,\ 300$ <br><br> $\sigma md = tmd = 87\ 300$ <br><br> $tdm = td$ avec une probabilité <br><br> de $6\ 10^{-8} = 3$ <br><br><br> Mesuré: <br> $tmd = 94\ 900;\ \sigma md = 73\ 400;$ <br><br> $td\ 99\% = 2\ 600$ |

La comparaison montre aisément que la prise de synchronisation est à peine affectée par le critère suivant l'invention, mais que par contre, la désynchronisation a peu de chance d'intervenir de manière fortuite.

Le circuit de la figure 4 est adaptable très facilement au cas où on veut obtenir $\alpha_1 \neq \alpha_2$. Pour ce faire, il suffit de remplacer le registre $R_2$ par un registre à décalage, $R_1$ pouvant n'être éventuellement qu'une bascule. Le décodage de $\overline{Q}\alpha$ ($R_2$) est introduit dans les mêmes conditions à une entrée de la porte 14. Le changement de synchronisation a alors lieu au bout de la $\alpha$ ième présence d'un motif de synchronisation potentielle et de la $(\alpha-1)$ ième absence d'un motif de synchronisation de référence. Cette variante permet d'obtenir des degrés intermédiaires de vérification du critère.

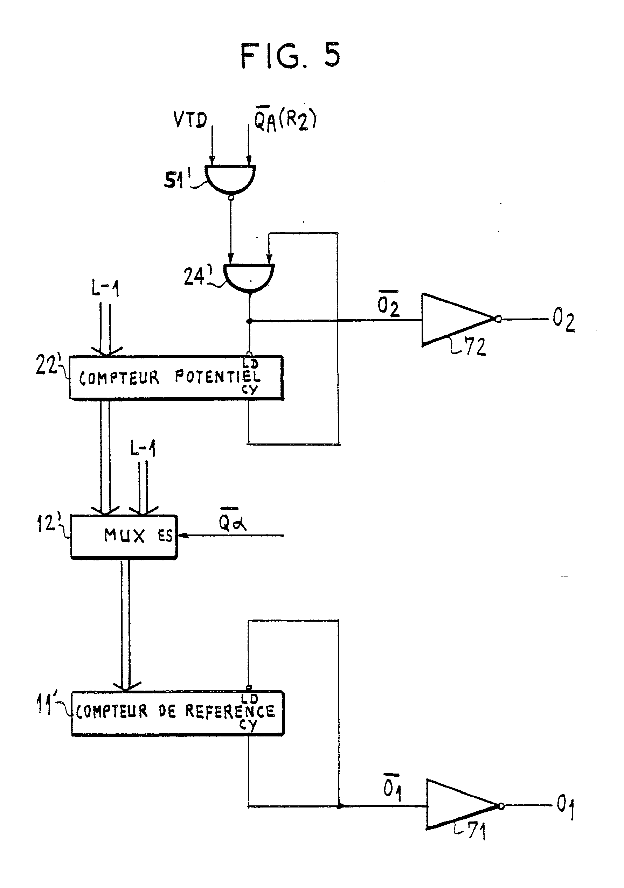

Le circuit de la figure 5 est une variante du circuit de la figure 4 où un compteur potentiel synchrone 22' et un compteur de référence synchrone 11' sont chargés suite au décodage d'un état donné. A titre d'exemple, les compteurs représentés figure 5 fonctionnent par décompte et on décode leur état de compte maximal n (C Y=0). L'introduction de ce signal de décodage à leur entrée de chargement LD provoque leur chargement.

Au niveau du compteur potentiel 22', le signal C Y est introduit à l'entrée d'une porte ET 24' dont l'autre entrée reçoit la sortie d'une porte inverseuse 51'. La porte ET inverseuse 51' reçoit à une entrée le signal VTD et à son autre entrée le signal $\overline{Q}_A$ ($R_2$) (figure 4). La porte ET 24' autorise le chargement à l'état L $-1$ du compteur potentiel 22' soit en présence du signal C Y=0, soit en présence d'un VTD=1 qui franchit la porte 51' ($\overline{Q}_A$ ($R_2$) ou $\overline{Q}$ (R)=1) ou bien de leur présence simultanée. La sortie de la porte 24' constitue l'inverse $\overline{O}_2$ du signal $O_2$ de la figure 4. Le signal $O_2$ peut être alors obtenu à l'aide d'un inverseur 72.

Le signal C Y du compteur de référence 11' est introduit directement à son entrée de chargement LD et constitue l'inverse $\overline{O}_1$ du signal $O_1$ de la

figure 4. Le signal $O_1$ peut être alors obtenu à l'aide d'un inverseur 71. Un signal $\overline{Qa}$ d'un registre à décalage (R, $R_1$ ou $R_2$) introduit à l'entrée de sélection ES d'un multiplexeur MUX provoquera le chargement du compteur de référence soit au compte L−1 si $\overline{Qa}=1$, soit par l'état des sorties du compteur potentiel si $\overline{Qa}=0$, ce qui correspond à un changement de synchronisation. Le schéma décrit à la figure 5 peut être très facilement réalisé sous forme d'un circuit programmable, car le bouclage des compteurs sur eux-même fait intervenir un état indépendant de la longueur L de la trame. Par conséquent, pour une application particulière, il suffit de programmer, par exemple à l'aidbude roues codeuses, les entrées des deux compteurs de manière qu'ils soient chargés à un état correspondant à la longueur L de la trame, dans les cas d'espèce L−1. Le degré $\alpha$ de vérification du critère est sélectionné en utilisant la sortie de rang $\alpha$ d'un registre à décalage $R_1$ ou $R_2$, un circuit standard pouvant dans ce but comporter deux registres à décalage. Le nombre d'entrées de la porte ET 31 fixe le nombre d'éléments binaires du motif de synchronisation. Un circuit programmable selon l'invention est susceptible d'être intégré sur un monolithe présentant les sorties nécessaires à la programmation de la longueur L de la trame et du degré $\alpha$ (entier ou intermédiaire) de vérification du critère.

## Revendication

Procédé de synchronisation à la réception d'un signal de transmission (LT) comportant un motif de synchronisation apparaissant périodiquement (mot de verrouillage de trame VT), ledit procédé comportant au moins une opération de validation du mot verrouillage de référence et au moins une opération de validation d'un mot de verrouillage potentiel, caractérisé en ce qu'il consiste:

— à rechercher systématiquement dans une trame, normalement synchronisée sur le mot de verrouillage de référence, s'il existe un mot de verrouillage potentiel dans cette trame,
— au premier mot de verrouillage potentiel alors trouvé, à cesser cette recherche systématique, et à noter la position dans ladite trame dudit mot de verrouillage potentiel,
— a vérifier alors dans la trame suivante la présence du mot de verrouillage de référence,
— à revenir au point de départ si ce dernier est toujours présent,
— dans le cas contraire, à vérifier, si ledit mot de verrouillage potentiel se retrouve, dans ladite trame suivante, au même endroit qui celui trouvé dans ladite trame précédente,
— à revenir au point de départ si cette dernière opération est négative,
— à continuer ces opérations dans le cas contraire,
— à opérer un changement de synchronisation sur ledit mot de verrouillage potentiel si $\alpha$ fois de suite on a retrouvé à la même place dans la trame ledit mot de verrouillage potentiel alors que l'on n'a simultanément pas retrouvé à sa place le mot de verrouillage de référence.

## Patentanspruch

Verfahren zur Synchronisierung eines übertragenen Signals (LT) beim Empfang, das ein periodisch auftretendes Synchronisationsmotiv enthält (Rahmenverriegelungswort VT), wobei das Verfahren mindestens einen Verfahrensschritt der Bewertung des Bezugsverriegelungsworts und mindestens einen Verfahrensschritt der Bewertung eines potentiellen Verriegelungsworts umfaßt, dadurch gekennzeichnet, daß

— systematisch in einem normalerweise auf das Bezugsverriegelungswort synchronisierten Rahmen nach einem potentiellen Verriegelungswort in diesem Rahmen gesucht wird,
— beim Auftreten des ersten so gefundenen potentiellen Verriegelungsworts diese systematische Suche abgebrochen wird und die Lage dieses potentiellen Verriegelungsworts in diesem Rahmen notiert wird,
— im nächstfolgenden Rahmen das Vorhandensein des Bezugsverriegelungsworts verifiziert wird,
— an den Anfang zurückgekehrt wird, wenn dieses Bezugsverriegelungswort immer noch vorliegt,
— im entgegengesetzten Fall verifiziert wird, ob das potentielle Verriegelungswort sich im nächstfolgenden Rahmen an derselben Stelle befindet wie im vorhergehenden Rahmen,
— zum Anfang zurückgekehrt wird, wenn dieser letztgenannte Verfahrensschritt negativ verläuft,
— diese Verfahrensschritte im gegenteiligen Fall fortgesetzt werden,
— eine Änderung der Synchronisation auf das potentielle Verriegelungswort bewirkt wird, wenn $\alpha$ mal hintereinander an derselben Stelle im Rahmen das potentielle Verriegelungswort gefunden wurde, während zugleich das Bezugs- Verriegelungswort an seinem Platz nicht gefunden wurde.

## Claim

A method for synchronizing a transmitted signal (LT) at the reception side, this signal including a periodically appearing synchronisation pattern (frame locking word VT), said method including at least one step of validating the reference locking word and at least one step of validating a potential locking word, characterized in that it consists in:

— searching systematically in a frame which is normally synchronized to the reference locking word, for a potential locking word in said frame,
— as soon as a first potential locking word has

11

0 058 586

12

been found, registering the location of said potential locking word in said frame,

— looking for the reference locking word in the next following frame,

— returning to the start point, if the latter is still present,

— verifying in the other case if said potential locking word is present in the next following frame at the same place as it has been found in the preceding frame,

— returning to the start point, if this last mentioned step had a negative result,

— continuing these steps, if this result was positive,

— operating a change of the synchronization onto said potential locking word, if in a succession of α frames, said potential locking word has been found always at the same location, whereas simultaneously, the reference locking word has not been found at its location.

# FIG. 1

VT                                    VT

$a$

$L_T$

# FIG. 2a

3

**DETECTEUR DES MOTS DE VERROUILLAGE**

T →

VTD

5

L

2 — **BASE DE TEMPS POTENTIELLE**    $O_2$

21

1 — **BASE DE TEMPS REFERENCE**    $O_1$

S

4 **CIRCUIT LOGIQUE DE VALIDATION DES VERROUILLAGES**

# FIG. 2b

VTD

5

$O_2$ →    **REGISTRE POTENTIEL**    4

S

$O_1$    **REGISTRE REFERENCE**

1

# FIG. 3

FIG. 4

# FIG. 5